# FASCICULE DE BREVET EUROPEEN

(11) **EP 2 359 683 B1**
(45) Date de publication et mention de la délivrance du brevet: **15.11.2017**
(21) Numéro de dépôt: 11290032.9
(22) Date de dépôt: 20.01.2011
(51) Int. Cl.: A01K 1/06

(54) **Barrière à cornadis**
Einsperrgitter
Stanchion grid

(30) Priorité: 16.02.2010 FR 1000639; 18.03.2010 FR 1001072
(43) Date de publication de la demande: 24.08.2011
(73) Titulaire: Jourdain, 45300 Escrennes (FR)
(72) Inventeur: Jourdain, Dominique Didier Martial, 45300 Escrennes (FR)
(74) Mandataire: Eidelsberg, Olivier Nathan

(56) Documents cités:
- EP-A2- 0 823 992
- FR-A1- 2 791 520
- FR-A1- 2 797 741
- FR-A1- 2 805 012
- US-B1- 6 863 031

## Description

La présente invention est relative à des perfectionnements aux barrières à cornadis.

Une barrière à cornadis comporte un longeron supérieur et un longeron inférieur réunis par des montants, fixes ou mobiles, l'espace séparant deux montants adjacents pouvant être réduit par un levier pivotant. Ce levier peut occuper trois positions dont deux délimitent un espace triangulaire (soit pointe en bas, soit pointe en haut) et dont la troisième permet soit de maintenir l'animal, soit d'empêcher son accès à l'auge. Dans cette troisième position, des moyens sont prévus pour verrouiller le levier pivotant.

Généralement, la partie supérieure du levier pivotant présente une fourche entre les ailes de laquelle s'étendent le longeron supérieur et une tringle pivotante. La tringle comporte des organes pouvant coopérer avec un arbre coulissant dont les extrémités sont guidées entre les ailes de la fourche précitée. L'arbre, en raison de son poids, repose naturellement sur la partie supérieure de la tringle.

Un tel dispositif est décrit dans le document FR 2791520. Dans ce dispositif, la tringle présente une encoche transversale dans laquelle peut tomber l'arbre coulissant lorsque l'encolure de l'animal appuie sur le levier pivotant.

Lorsque l'arbre coulissant est disposé dans l'encoche précitée, le levier est immobilisé dans les deux sens. Pour le libérer, il suffit de faire pivoter la tringle précitée.

Ce dispositif est très avantageux car la tringle ne présente aucune aspérité ce qui simplifie la réalisation des paliers et la mise en place de ladite tringle.

Toutefois, l'expérience a montré que ce dispositif n'était pas totalement satisfaisant.

Le fait de réaliser des encoches sur une tringle la fragilise en constituant des amorces de rupture. Ce phénomène est d'autant plus important que la tringle est généralement réalisée à partir d'un tube afin de réduire la masse de métal utilisée.

Par ailleurs, ce dispositif ne permet pas de réduire suffisamment les bruits résultants des chocs dus aux pièces en mouvement (chute de l'arbre coulissant dans l'encoche).

Dans le document précité, chaque palier se présentait sous la forme d'un étrier dont la partie médiane était soudée sur le longeron supérieur et dont les branches enserraient la tringle de verrouillage pour l'empêcher de se déplacer vers le haut. Chaque palier présentait une encoche dont la section était quasiment identique à celle correspondante de la tringle. Les paliers étaient disposés au droit des encoches et cette disposition était censée permettre le renforcement de la tringle. L'expérience a montré que l'avantage obtenu était contrebalancé par un inconvénient. En effet, pour que le système fonctionne parfaitement, il faut que les distances entre les encoches soient précises de même que la distance séparant les différents paliers. Une telle précision est difficile à obtenir.

D'autres barrières similaires sont décrites dans les documentes EP 0823992 et US 6863031 B1. La présente invention qui remédie à ces inconvénients est remarquable en ce que l'encoche dans laquelle tombe l'arbre coulissant porté par le levier pivotant est pratiquée sur un manchon cylindrique susceptible d'être introduit axialement dans un palier ouvert rendu solidaire du longeron supérieur de la barrière, ledit manchon comportant des moyens pour assurer son verrouillage axial.

L'entraînement en rotation du manchon précité, ou manchon de verrouillage, est assuré par une tringle traversant librement ce dernier, l'axe de ladite tringle et celui dudit manchon étant distincts.

L'immobilisation axiale de la tringle et sa commande en rotation sont assurées, à l'une de ses extrémités, par un manchon cylindrique, dont l'axe est confondu avec celui des manchons de verrouillage, immobilisé axialement et dans lequel l'extrémité de la tringle est bloquée.

La présente invention sera mieux comprise par la description qui va suivre faite en se référant aux dessins annexés, à titre d'exemple indicatif seulement, sur lesquels :
- la figure 1 est une vue en coupe d'un manchon de verrouillage conforme à l'invention ;
- la figure 2 est une vue en coupe effectuée selon la ligne II-II de la figure 1 ;
- la figure 3 est une vue en coupe effectuée selon la ligne III-III de la figure 1 ;
- la figure 4 est la vue de dessus de la figure 1 ;
- la figure 5 est une vue en perspective montrant un palier apte à recevoir le manchon de la figure 1 ;
- la figure 6 est une vue en élévation montrant le palier fixé sur le longeron supérieur de la barrière ;
- la figure 7 est la vue de droite de la figure 6 ;
- la figure 8 est une vue en perspective montrant la mise en place du manchon de la figure 1 dans le palier de la figure 5, pour des problèmes d'encombrement, la représentation du manchon a été limitée à sa portion centrale A ;
- la figure 9 est une vue analogue à celle 8, le manchon étant verrouillé axialement et représenté dans la position où rien ne s'oppose au pivotement du levier pivotant usuel, position dite « libre-service » ;
- la figure 10 est une vue analogue à celle 9, le manchon étant représenté dans la position où l'arbre coulissant usuel (non représenté) peut chuter dans l'encoche pour immobiliser le levier pivotant, position dite « de sécurité »;
- la figure 11 est une vue par bout de l'extrémité de la tringle pivotante, la position des organes mobiles correspondant à la figure 10 ;
- la figure 12 est une vue analogue à celle 11, la position des organes mobiles correspondant à la figure 9 ;
- les figures 13 et 14 sont des vues en perspective montrant la mise en place du manchon de verrouillage de la tringle ;

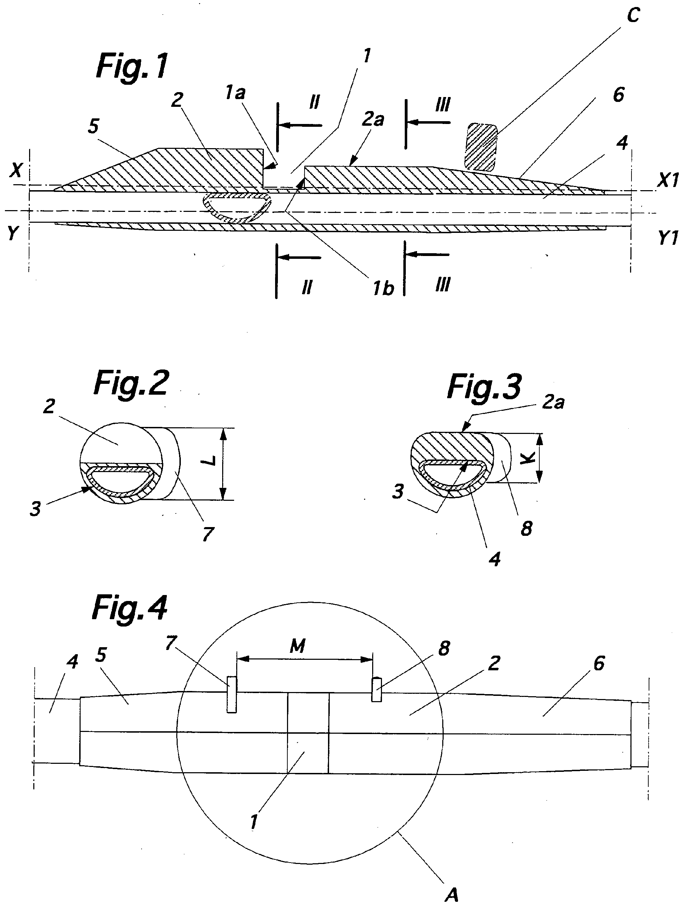

- la figure 1 5 est une vue analogue à celle 7, montrant une variante de réalisation du palier ;

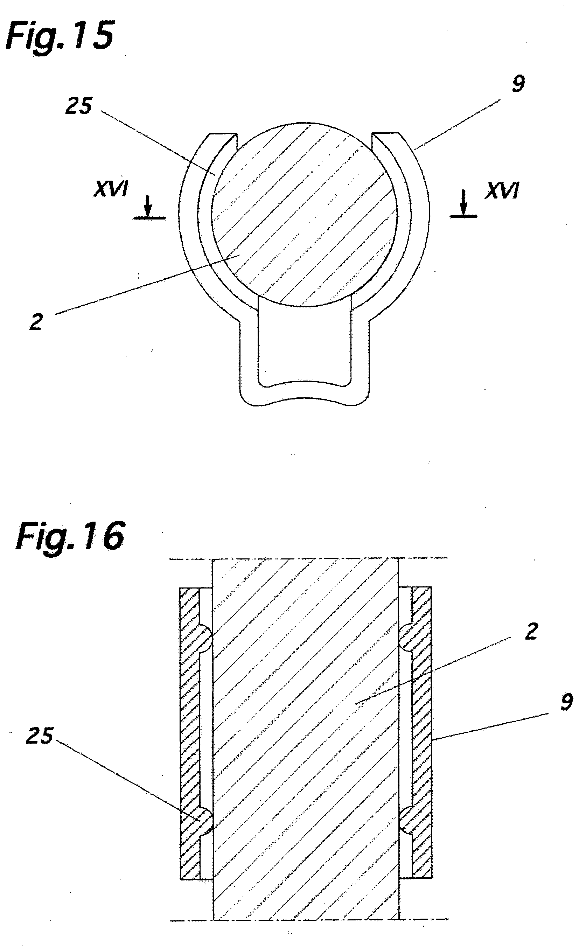

- la figure 16 est une vue en coupe effectuée selon la ligne XVI-XVI de la figure 15, le manchon de l'invention étant représenté sous une forme simplifiée et la coupe étant réalisée en dessous du diamètre du palier ;

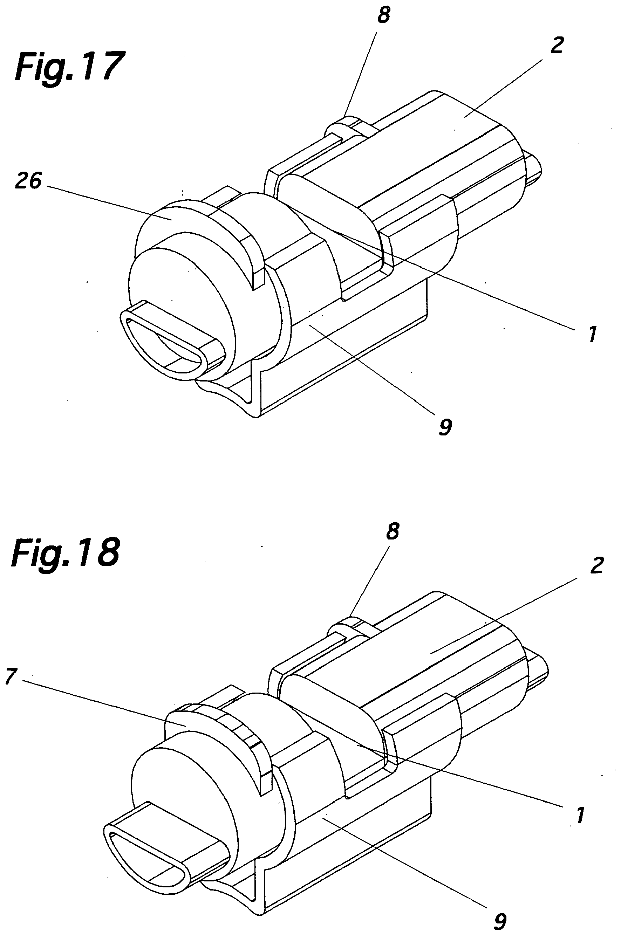

- la figure 17 est une vue analogue à celle 10 montrant un autre mode de réalisation ;
- la figure 18 est une vue analogue à celle 17, montrant une variante de réalisation.

En se reportant aux dessins, on voit que l'encoche 1, du genre de celle décrite dans le document précité et dans laquelle peut tomber un arbre coulissant C pour immobiliser un levier pivotant d'un type connu, est pratiquée sur un manchon 2 comportant une partie centrale cylindrique.

Le manchon 2 présente un canal 3 longitudinal, dans lequel on peut engager, librement, une tringle 4.

L'axe longitudinal XX1 du manchon 2 et celui YY1 du canal 3 sont distincts.

Le manchon 2 présente à ses extrémités des parties cylindro-coniques 5 et 6, dont la section extrême est pratiquement égale, bien que supérieure, à la section du canal 3.

Comme dans le document précité, l'encoche 1 présente deux flans transversaux 1a et 1b dont les hauteurs sont différentes, ce résultat est obtenu en arasant la partie 2a du manchon, de cette façon, la hauteur du flan 1a est supérieure à elle du flan 1b. Cette partie 2a constitue une surface qui est sensiblement parallèle à l'axe du manchon, mais cette surface pourrait être inclinée vers l'encoche.

Le manchon 2 est réalisé, de préférence, en matière plastique moulée ou injectée et contribue donc à diminuer les bruits, notamment ceux dus à la chute de l'arbre C (il est à noter que parfois cet organe connu est dénommé « axe » ou « axe de verrouillage »).

Le manchon présente deux extensions radiales 7 et 8, ou butées, disposées de part et d'autre de l'encoche 1 mais décalées angulairement par rapport à cette dernière. Dans l'exemple représenté, ce décalage est de l'ordre de 90°.

Comme cela ressort, tout particulièrement des figures 2 et 3, la largeur des butées 7 et 8 est inégale, la largeur L de celle 7 étant supérieure à celle K de ladite butée 8.

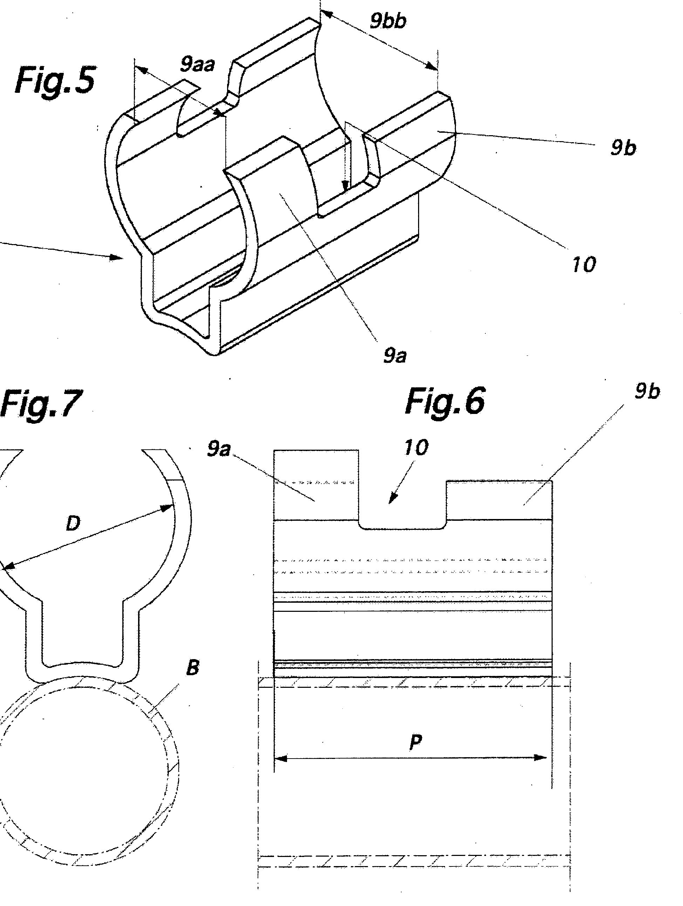

Les figures 5 à 7, notamment, montrent un palier 9 apte à opérer avec le manchon 2.

Ce palier 9 affecte la forme d'un étrier dont la partie médiane est fixée, par soudage par exemple, contre le longeron supérieur B de la barrière.

Les deux branches de l'étrier 9 sont conformées pour former un palier ouvert dont le diamètre D est égal, au jeu près, à celui de la partie centrale, du manchon 2. Les deux branches de ce palier sont encochées pour reproduire sensiblement le profil de l'encoche 1 du manchon. De préférence, les dimensions de chaque encoche 10 sont légèrement supérieures à celles de l'encoche du manchon.

Chaque encoche 10 ménage deux parties 9a et 9b, celle 9b étant moins enveloppante que celle 9a. De ce fait, la distance 9aa séparant les bords libres des parties 9a de chaque branche est inférieure à celle 9bb séparant les bords libres des parties 9b.

Selon l'invention, la largeur K de la butée 8 est inférieure à la distance 9aa, tandis que la largeur L de la butée 7 est supérieure à la distance 9aa.

La distance M séparant les deux butées 7 et 8 est, au jeu près, égale à la longueur P du palier.

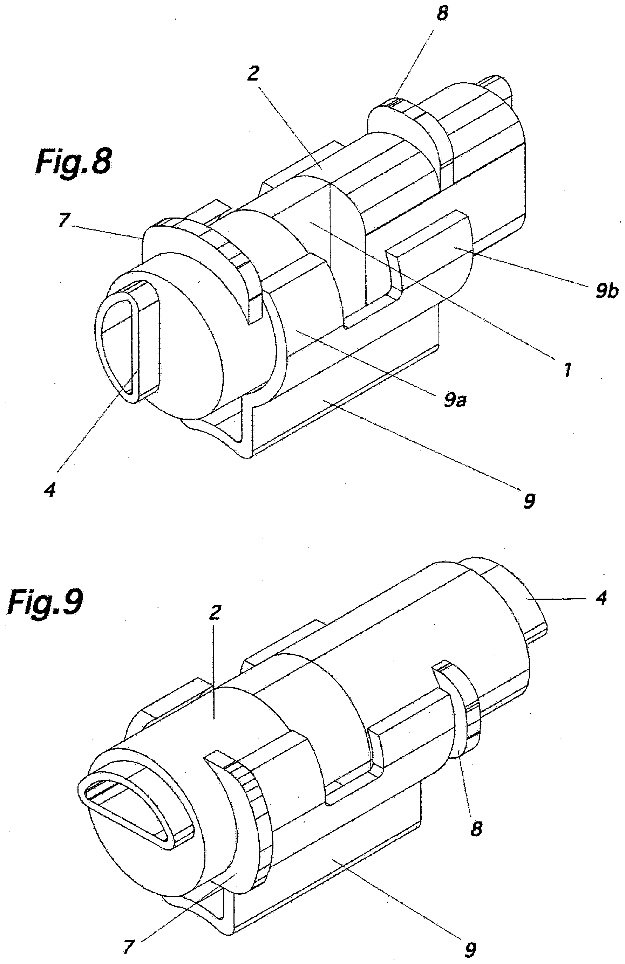

La mise en place de chaque manchon s'effectue en engageant le manchon, dans le palier correspondant, comme montré sur la figure 8. Lorsque la butée 7 prend appui contre l'extrémité des parties 9a du palier, il suffit de faire pivoter le manchon pour l'immobiliser axialement par rapport audit palier et de placer ce dernier en position opérationnelle. La valeur du pivotement dépend de la valeur du décalage angulaire entre les butées et l'encoche. Dans l'exemple représenté, ce décalage est de 90°.

Comme l'axe de la tringle 4, qui traverse librement tous les manchons, est distinct de celui de rotation desdits manchons, la section de la tringle est indifférente, il suffit d'actionner en rotation l'un des manchons pour que ce mouvement de rotation soit transmis aux autres manchons de la barrière.

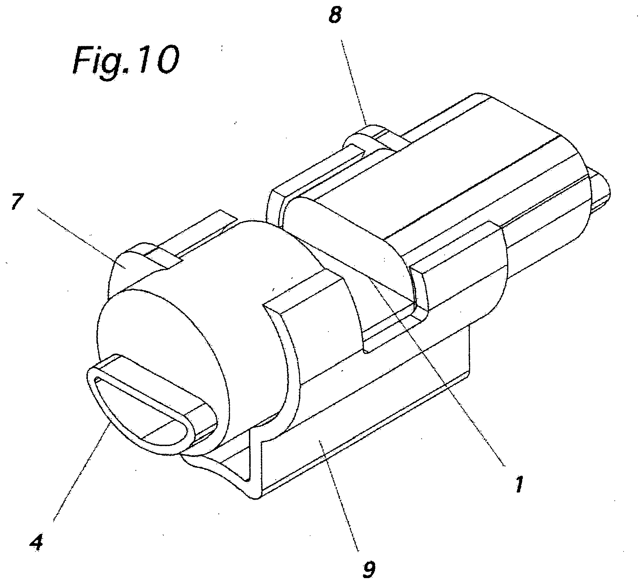

De la façon connue, cette commande s'effectue à partir de l'une des extrémités de la barrière et des moyens sont prévus pour verrouiller la tringle selon l'une ou l'autre des positions montrées sur les figures 9 et 10.

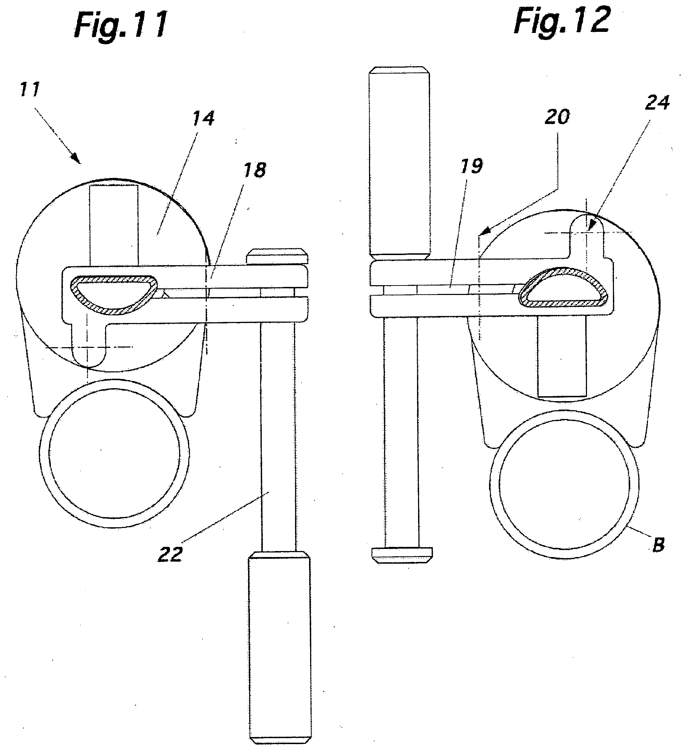

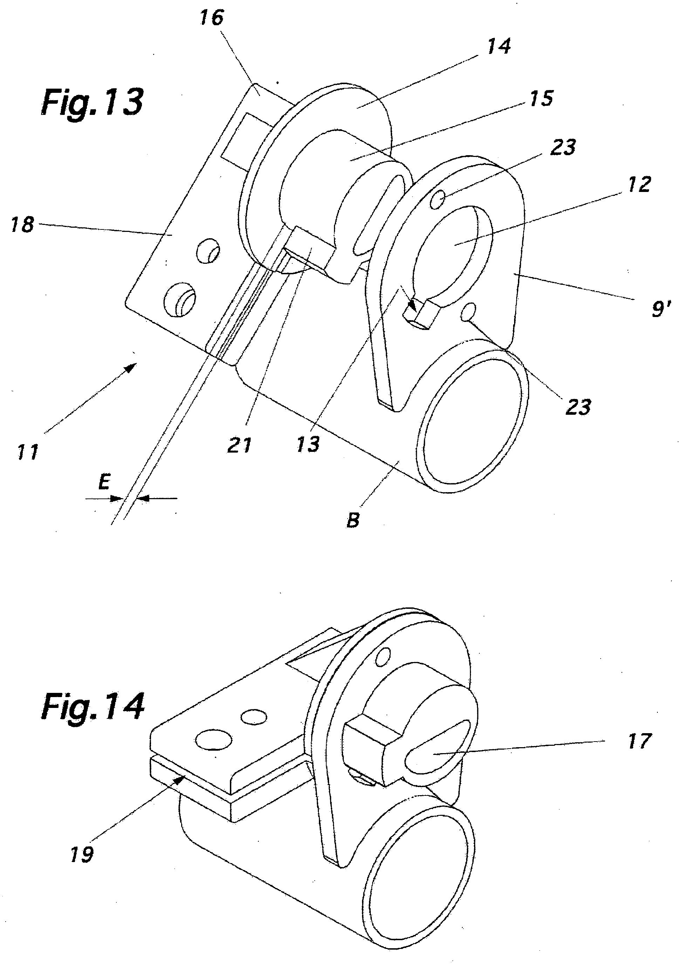

Selon l'invention et comme cela ressort des figures 11 à 14, des moyens sont prévus à l'une des extrémités de la barrière pour permettre la rotation des manchons et leur verrouillage dans la position requise.

Ces moyens se composent d'un palier 9' et d'un manchon de verrouillage 11, réalisé, de préférence, dans la même matière que le manchon 2.

Le palier 9' est fixé sur le longeron B et présente un alésage 12 dont l'axe est confondu avec celui XX1 des manchons 2, ledit alésage comportant une encoche 13.

Le manchon 11 présente trois parties 14,15 et 16.

La partie 14, dont le diamètre est supérieur à l'alésage 12 du palier 9' supporte sur une face la partie 15, qui est constituée par un embout cylindrique pouvant tourillonner dans l'alésage 12 dudit palier 9' et, sur l'autre, la partie 16, l'ensemble présentant un canal 17 de passage de la tringle 4.

La partie 16, présente une extension latérale 18 comportant une fente 19 s'étendant jusqu'au canal 17, l'ensemble se comportant comme un collier de serrage. L'axe 20, matérialise la vis de blocage de la tringle 4.

L'embout 15 présente un bossage 21 longitudinal dont la section est égale, au jeu près, à celui de l'encoche 13. Ce bossage ne s'étend pas jusqu'à la face correspondante de la butée 14 mais ménage un espace E égal, au jeu près, à l'épaisseur du palier 9'.

L'encoche 13 est décalée angulairement de façon à occuper une position qui est distincte de celle du bossage 21 lorsque la tringle est disposée dans l'une ou l'autre des positions montrées sur les figures 9 et 10.

Comme montré sur les figures 11 et 12, la commande de la rotation de la tringle 4, d'entraînement des manchons 2, est assurée par une poignée coulissante 22 traversant, librement, l'extension fendue 18.

De la façon connue, des moyens sont prévus pour maintenir la tringle selon l'une ou l'autre des positions des figures 9 et 10. A cet effet, le manchon 11 peut comporter un doigt escamotable qui, sous l'action d'un ressort, peut pénétrer dans l'un des trous 23 du palier 9'. Ces deux trous sont diamétralement opposés. Sur les figures 11 et 12 le doigt escamotable est figuré par son axe 24. D'une façon générale, le palier 9' comporte autant de trous 23 qu'il est nécessaire (par exemple trois trous si la tringle 4 doit occuper trois positions stables).

Selon une variante de réalisation, des moyens sont prévus pour limiter les contacts entre le manchon 2 et le palier 9 de façon à réduire les frottements et le bruit lors de la rotation dudit manchon.

Selon un mode de réalisation, le palier 9 présente, au moins, deux cordons 25, identiques, s'étendant chacun dans un plan transversal et, de préférence, de part et d'autre de l'encoche 10 dudit palier.

Selon une variante, chaque cordon peut être limité à une pluralité de plots dont les sommets sont tangents à une circonférence dont le diamètre est égal au jeu près à celui du manchon 2.

Les moyens ci-dessus sont applicables au palier 9'.

Il a été précisé, ci-dessus, que certaines pièces étaient réalisées en matière plastique, mais il est bien entendu que celles-ci peuvent être réalisées en métal ou en un alliage métallique.

Selon un autre mode de réalisation, l'une des butées utilisées pour immobiliser axialement le manchon 2 dans le palier 9 est utilisée pour assurer aussi une fonction de sécurité.

Si on considère la figure 10, on constate que le manchon est dans la position où l'axe de verrouillage peut tomber dans l'encoche 1. L'expérience a montré que dans certains cas, certes rares, l'axe de verrouillage franchissait l'encoche précitée, le levier pivotant pouvant occuper une position délimitant un espace triangulaire pointe en haut, l'animal n'étant alors pas entravé.

Selon l'invention, la butée 26 limitant l'introduction du manchon dans le palier 9 s'étend sur une longueur d'arc suffisamment importante pour former, à la partie supérieure du manchon, une barrière de retenue de l'axe de verrouillage comme montré sur la figure 17.

Selon une variante, un résultat analogue peut être obtenu en décalant la butée 7, sensiblement, de 90° par rapport à celle 8, comme montré sur la figure 18.

Que ce soit le mode de réalisation de la figure 17 ou celui de la figure 18, on constate que le positionnement de la butée 26 ou de celle 7 permet de former un obstacle à l'axe de verrouillage et le levier pivotant est maintenu dans la position où l'animal est entravé. Dès que l'animal déplace son encolure pour tenter de se dégager, le levier pivotant entraîne l'axe qui tombe dans l'encoche : le verrouillage du levier pivotant est alors assuré.

## Revendications

1. Barrière à cornadis du genre de celles comportant un longeron supérieur (B) et un longeron inférieur réunis par des montants, fixes ou mobiles, l'espace séparant deux montants adjacents pouvant être réduit par un levier pivotant pouvant occuper, deux voire trois positions, dont une permet, notamment, de maintenir l'animal, ledit levier comportant à cet effet à sa partie supérieure une fourche entre les ailes de laquelle s'étend le longeron supérieur et au-dessus de celui-ci une tringle pivotante comportant une pluralité d'encoches dans chacune desquelles peut tomber un axe coulissant (C) guidé dans la fourche du levier pivotant correspondant, **caractérisée en ce que** l'encoche (1) de verrouillage du levier pivotant est pratiquée sur un manchon (2) cylindrique, traversé librement par une tringle pivotante (4) dont l'axe longitudinal (YY₁) est distinct de celui (XX₁) dudit manchon coulissant qui comporte des moyens pour assurer son immobilisation axiale par rapport à un palier (9) rendu solidaire du longeron supérieur (B), l'agencement étant tel que lorsque le manchon cylindrique tourne sur lui-même par rapport à l'axe (XX₁), l'axe (YY₁) de la tringle tourne autour de l'axe (XX₁) à distance de celui-ci suivant une trajectoire circulaire de rayon égal à la distance entre les axes (XX₁) et (YY₁).

2. Barrière à cornadis selon la revendication 1, **caractérisée en ce que** chaque palier (9) se présente sous la forme d'un étrier ouvert, dont la partie médiane est rendue solidaire du longeron supérieur, et dont les branches sont conformées pour former un palier dont le diamètre est égal, à peu près, à celui de la partie centrale du manchon (2), les deux branches étant encochées pour reproduire sensiblement le profil de l'encoche (1).

3. Barrière selon la revendication 2, **caractérisée en ce que** les dimensions des encoches (10) du palier sont légèrement supérieures à celles de l'encoche du manchon.

4. Barrière selon l'une des revendications 1 à 3, **caractérisée en ce que** chaque manchon présente deux extensions radiales (7 et 8) disposées de part et d'autre de l'encoche (1), la distance séparant ces extensions, ou butées, étant, au jeu près, au moins égale à la longueur du palier correspondant.

5. Barrière selon la revendication 4, **caractérisée en ce que** la largeur (L et K) des butées sont différentes.

6. Barrière selon l'une des revendications 4 à 5, **caractérisée en ce que** chaque encoche (10) ménage sur chaque branche de l'étrier deux parties (9a et 9b) dont les hauteurs sont différentes, ce qui implique que la distance (9aa) séparant la partie supérieure des parties les plus hautes (9a) est inférieure à la distance (9bb) séparant les parties les plus basses (9b) et **en ce que** la largeur (L) de la butée (7) est inférieure à la distance (9aa), tandis que la largeur (K) de la butée (8) est inférieure à la distance (9bb).

7. Barrière selon l'une des revendications 4 à 6, **caractérisée en ce que** les butées (7 et 8) sont décalées angulairement par rapport à l'encoche (1).

8. Barrière selon la revendication 7, **caractérisée en ce que** le décalage est de l'ordre de 90°.

9. Barrière selon l'une des revendications 4 à 6, **caractérisée en ce que** la butée (7-26), limitant la pénétration du manchon dans le palier (9), est positionnée angulairement de façon à former, le cas échéant, une barrière de retenue de l'axe de verrouillage usuel.

10. Barrière selon l'une des revendications 1 à 9, **caractérisée en ce que** des moyens sont prévus à l'extrémité de la barrière pour permettre l'immobilisation axiale de la tringle pivotante et la commande de sa rotation.

11. Barrière selon la revendication 10, **caractérisée en ce que** la tringle est maintenue et actionnée à partir d'un manchon (11), traversé par la tringle pivotante, comportant trois parties à savoir : une partie (15), engagée et maintenue axialement dans un palier (9'), une seconde partie (14) prenant appui contre ledit palier (9') et une troisième partie (16) se comportant comme un collier et présentant des moyens (18-22) pour immobiliser ladite tringle et permettre sa commande en rotation.

12. Barrière selon l'une quelconque des revendications précédentes, **caractérisée en ce que** des moyens sont prévus pour limiter les contacts entre les paliers (9-9') et les manchons (2-11).

## Patentansprüche

1. Einsperrgitter von der Art von jenen, die einen oberen Längsträger (B) und einen unteren Längsträger aufweisen, die durch feste oder bewegliche Pfosten verbunden sind, wobei der Raum, der zwei benachbarte Pfosten trennt, durch einen Schwenkhebel reduziert werden kann, der zwei oder sogar drei Positionen einnehmen kann, von denen eine insbesondere ermöglicht, das Tier zu halten, wobei der Hebel dazu an seinem oberen Teil eine Gabel, zwischen deren Zinken sich der obere Längsträger erstreckt, und darüber eine schwenkbare Stange aufweist, die mehrere Kerben aufweist, in die eine verschiebbare Achse (C) fallen kann, die in der Gabel des entsprechenden Schwenkhebels geführt wird,
**dadurch gekennzeichnet, dass** die Verriegelungskerbe (1) des Schwenkhebels an einer zylindrischen Hülse (2) ausgebildet ist, die frei durch eine schwenkbare Stange (4) durchquert wird, deren Längsachse (YY₁) von jener (XX₁) der Verschiebehülse verschieden ist, die Mittel aufweist, um ihre axiale Blockierung in Bezug auf ein Lager (9) zu gewährleisten, das mit dem oberen Längsträger (B) fest verbunden ist, wobei die Anordnung derart ist, dass, wenn sich die zylindrische Hülse in Bezug auf die Achse (XX₁) um sich selbst dreht, sich die Achse (YY₁) der Stange um die Achse (XX₁) in einem Abstand davon entlang einer kreisförmigen Bahn mit einem Radius, der gleich dem Abstand zwischen den Achsen (XX₁) und (YY₁) ist, dreht.

2. Einsperrgitter nach Anspruch 1, **dadurch gekennzeichnet, dass** jedes Lager (9) die Form eines offenen Bügels aufweist, dessen mittlerer Teil mit dem oberen Längsträger fest verbunden ist und dessen Schenkel ausgebildet sind, um ein Lager zu bilden, dessen Durchmesser in etwa gleich jenem des mittleren Teils der Hülse (2) ist, wobei die zwei Schenkel eingekerbt sind, um im Wesentlichen das Profil der Kerbe (1) nachzubilden.

3. Gitter nach Anspruch 2, **dadurch gekennzeichnet, dass** die Abmessungen der Kerben (10) des Lagers leicht größer als jene der Kerbe der Hülse sind.

4. Gitter nach einem der Ansprüche 1 bis 3, **dadurch gekennzeichnet, dass** jede Hülse zwei radiale Ausdehnungen (7 und 8) aufweist, die auf beiden Seiten der Kerbe (1) angeordnet sind, wobei der Abstand, der diese Ausdehnungen oder Anschläge trennt, mit geringem Spiel mindestens gleich der Länge des entsprechenden Lagers ist.

5. Gitter nach Anspruch 4, **dadurch gekennzeichnet, dass** die Breiten (L und K) der Anschläge unterschiedlich sind.

6. Gitter nach einem der Ansprüche 4 bis 5, **dadurch gekennzeichnet, dass** jede Kerbe (10) auf jedem Schenkel des Bügels zwei Teile (9a und 9b) aufweist, deren Höhen unterschiedlich sind, was impliziert, dass der Abstand (9aa), der den unteren Teil der höchsten Teile (9a) trennt, kleiner als der Abstand (9bb) ist, der die niedrigsten Teile (9b) trennt, und dass die Breite (L) des Anschlags (7) kleiner als der Abstand (9aa) ist, während die Breite (K) des Anschlags (8) kleiner als der Abstand (9bb) ist.

7. Gitter nach einem der Ansprüche 4 bis 6, **dadurch gekennzeichnet, dass** die Anschläge (7 und 8) gegenüber der Kerbe (1) winkelmäßig versetzt sind.

8. Gitter nach Anspruch 7, **dadurch gekennzeichnet, dass** die Versetzung in etwa 90° beträgt.

9. Gitter nach einem der Ansprüche 4 bis 6, **dadurch gekennzeichnet, dass** der Anschlag (7-26), der das Eindringen der Hülse in das Lager (9) begrenzt, winkelmäßig derart angeordnet ist, um gegebenenfalls eine Rückhaltebarriere des üblichen Verriegelungsstiftes zu bilden.

10. Gitter nach einem der Ansprüche 1 bis 9, **dadurch gekennzeichnet, dass** Mittel am Ende des Gitters vorgesehen sind, um die axiale Blockierung der schwenkbaren Stange und das Steuern ihrer Drehung zu ermöglichen.

11. Gitter nach Anspruch 10, **dadurch gekennzeichnet, dass** die Stange ausgehend von einer Hülse (11) gehalten und betätigt wird, die von der schwenkbaren Stange durchquert wird, die mindestens drei Teile aufweist, und zwar: einen Teil (15), der axial in ein Lager (9') eingeführt und darin gehalten wird, einen zweiten Teil (14), der auf dem Lager (9') aufliegt, und einen dritten Teil (16), der sich wie eine Schelle verhält und Mittel (18-22) aufweist, um die Stange zu blockieren und das Steuern der Drehbewegung zu ermöglichen.

12. Gitter nach einem der vorhergehenden Ansprüche, **dadurch gekennzeichnet, dass** Mittel vorgesehen sind, um die Kontakte zwischen den Lagern (9-9') und den Hülsen (2-11) zu begrenzen.

## Claims

1. A stanchion barrier of the type comprising an upper side rail (B) and a lower side rail joined together by fixed or mobile posts, the space separating two adjacent posts being able to be reduced by a pivoting lever that can occupy two or even three positions, one of which makes it possible, in particular, to hold the animal, said lever comprising to this effect on its upper part a fork between the wings from which the upper side rail extends, and above the latter a pivoting rod comprising a plurality of notches into each of which a sliding pin (C) can fall, guided in the fork of the corresponding pivoting lever, **characterised in that** the notch (1) for locking the pivoting lever is made on a cylindrical sleeve (2), freely crossed by a pivoting rod (4), the longitudinal axis (YY₁) of which is separate from that (XX₁) of said sliding sleeve which comprises means for providing its axial immobilisation in relation to a bearing (9) made integrally with the upper side rail (B), the arrangement being such that when the cylindrical sleeve turns on itself in relation to the axis (XX₁), the axis (YY₁) of the rod turns about the axis (XX₁) a distance away from the latter following a circular radius path equal to the distance between the axes (XX₁) and (YY₁).

2. The stanchion barrier according to Claim 1, **characterised in that** each bearing (9) is in the form of an open bracket, the central part of which is made integrally with the upper side rail, and the branches of which are shaped to form a bearing of which the diameter is almost equal to that of the central part of the sleeve (2), the two branches being notched to reproduce substantially the profile of the notch (1).

3. The barrier according to Claim 2, **characterised in that** the dimensions of the notches (10) of the bearing are slightly greater than those of the notch of the sleeve.

4. The barrier according to any of Claims 1 to 3, **characterised in that** each sleeve has two radial extensions (7 and 8) located on either side of the notch (1), the distance separating these extensions, or stops, being almost at least equal to the length of the corresponding bearing.

5. The barrier according to Claim 4, **characterised in that** the widths (L and K) of the stops are different.

6. The barrier according to either of Claims 4 to 5, **characterised in that** each notch (10) forms on each branch of the bracket two parts (9a and 9b) of which the heights are different, and this means that the distance (9aa) separating the upper part of the highest parts (9a) is less than the distance (9bb) separating the lowest parts (9b), and **in that** the width (L) of the stop (7) is less than the distance (9aa), whereas the width (K) of the stop (8) is less than the distance (9bb).

7. The barrier according to any of Claims 4 to 6, **characterised in that** the stops (7 and 8) are offset angularly in relation to the notch (1).

8. The barrier according to Claim 7, **characterised in that** the offset is about 90°.

9. The barrier according to any of Claims 4 to 6, **characterised in that** the stop (7-26), limiting the penetration of the sleeve into the bearing (9), is positioned angularly such as to form, if necessary, a barrier for holding the usual locking pin.

10. The barrier according to any of Claims 1 to 9, **characterised in that** means are provided at the end of the barrier to allow axial immobilisation of the pivoting rod and control of its rotation.

11. The barrier according to Claim 10, **characterised in that** the rod is held and actuated by a sleeve (11), crossed by the pivoting rod, comprising three parts, namely: a part (15) engaged and held axially in a bearing (9'), a second part (14) being supported against said bearing (9'), and a third part (16) acting as a clamp and having means (18-22) for immobilising said rod and allowing its rotation control.

12. The barrier according to any of the preceding claims, **characterised in that** means are provided for limiting the contact between the bearings (9-9') and the sleeves (2-11).
